# EUROPEAN PATENT SPECIFICATION

(11) **EP 4 459 738 B1**
(45) Date of publication and mention of the grant of the patent: **06.05.2026**
(21) Application number: 22915266.5
(22) Date of filing: 16.12.2022
(51) Int. Cl.: H01M 10/44, H01M 10/48, H01M 10/0585, H01M 10/0562, H01M 10/0525, H01M 10/052, H01M 4/38, H01M 4/1395, H01M 4/134

(54) **METHOD FOR CHARGING SECONDARY BATTERY**
VERFAHREN ZUM LADEN EINER SEKUNDÄRBATTERIE
PROCÉDÉ DE CHARGE DE BATTERIE SECONDAIRE

(30) Priority: 27.12.2021 JP 2021212284
(43) Date of publication of application: 06.11.2024
(73) Proprietor: NISSAN MOTOR CO., LTD., Kanagawa 221-0023 (JP); Renault s.a.s, 92100 Boulogne Billancourt (FR)
(72) Inventor: DOI, Shotaro, Atsugi-shi, Kanagawa 243-0123 (JP); ONO, Yoshitaka, Atsugi-shi, Kanagawa 243-0123 (JP); TANAKA, Hiroyuki, Atsugi-shi, Kanagawa 243-0123 (JP); OSHIHARA, Kenzo, Atsugi-shi, Kanagawa 243-0123 (JP)
(74) Representative: Grünecker Patent- und Rechtsanwälte PartG mbB
(86) International application number: PCT/IB2022/000724
(87) International publication number: WO 2023/126674

(56) References cited:
- EP-A1- 3 595 055
- WO-A1-00/42673
- WO-A1-2022/065088
- WO-A1-2022/163539
- CN-A- 112 640 185
- JP-A- 2003 109 672
- JP-A- 2016 035 867
- JP-A- 2020 009 724
- US-A1- 2002 018 935

## Description

### TECHNICAL FIELD

The present invention relates to a method for charging secondary battery.

### BACKGROUND ART

In recent years, in order to fight global warming, there is a strong need for reduction of the amount of carbon dioxide. In the automobile industry, there are increasing expectations for a reduction of carbon dioxide emissions by introduction of electric vehicles (EV) and hybrid electric vehicles (HEV), and development of secondary batteries such as secondary batteries for motor driving, which are key to practical application of such vehicles, has been actively conducted.

A secondary battery for motor driving is required to have extremely high output characteristics and high energy as compared with a lithium secondary battery for consumer use used in a mobile phone, a notebook computer, and the like. Therefore, a lithium secondary battery having the highest theoretical energy among all practical batteries has attracted attention, and is currently being rapidly developed.

Here, lithium secondary batteries that are currently widespread use a combustible organic electrolyte solution as an electrolyte. In such liquid-based lithium secondary batteries, safety measures against liquid leakage, short circuit, overcharge, and the like are more strictly required than other batteries.

Therefore, in recent years, research and development on an all-solid-state lithium secondary battery using an oxide-based or sulfide-based solid electrolyte as an electrolyte have been actively conducted. The solid electrolyte is a material mainly made of an ion conductor capable of ion conduction in a solid. Therefore, in the all-solid-state lithium secondary battery, in principle, various problems caused by the combustible organic electrolyte solution do not occur unlike the conventional liquid lithium secondary battery. Further, in general, when a positive electrode material having a high potential and a large capacity and a negative electrode material having a large capacity are used, the power density and the energy density of the battery can be significantly improved. An all-solid-state lithium secondary battery using a sulfide-based material as a positive electrode active material and using metallic lithium or a lithium-containing alloy as a negative electrode active material is a promising candidate.

Meanwhile, in the lithium secondary battery, the negative electrode potential decreases with the progress of charging. When the negative electrode potential decreases to be lower than 0 V (vs. Li/Li+), metal lithium is precipitated at the negative electrode, and dendrite (tree-like) crystals are precipitated (this phenomenon is also referred to as "electrodeposition of metal lithium"). When electrodeposition of metallic lithium occurs, there is a problem that a deposited dendrite penetrates the solid electrolyte layer to cause an internal short circuit in the battery.

For example, JP 2020-009724 A discloses a charging method in a secondary battery utilizing a deposition-dissolution reaction of metallic lithium as a reaction of a negative electrode for the purpose of achieving both suppression of a short circuit in the battery and shortening of a charging time. The charging method includes a first charging step in which the secondary battery is charged at a first current density I1, and a second charging step in which the secondary battery is charged at a second current density I2 greater than the first current density I1 after the first charging step. Then, the first charging step is characterized in that when the roughness height on the surface on the negative electrode current collector foil side of the solid electrolyte layer is represented by Y (um) and the thickness of the roughness coating layer is represented by X (µm), the secondary battery is charged at the first current density I1 until X/Y becomes 0.5 or more.

### SUMMARY OF INVENTION

However, according to the study by the present inventors, when the charging method described in JP 2020-009724 A is applied to a secondary battery, it has been found that a short circuit in the battery sometimes cannot be sufficiently suppressed.

Therefore, an object of the present invention is to provide a means for more effectively suppressing a short circuit in a secondary battery.

The present inventors have conducted intensive studies in order to solve the above problems. As a result, the present inventors have found that the problem can be solved by performing pausing and/or discharging at least once and performing charging so that the SOC (State of Charge) does not exceed 4.5% in a charging step corresponding to the "first charging step" described in JP 2020-009724 A, and thus completed the present invention. In the present description, an uncharged state is defined as an SOC of 0%, and a state in which a current value becomes 20% or less of a constant current value by charging at a constant current and charging at a constant voltage after 4.2 V is reached is defined as an SOC of 100%.

An embodiment of the present invention relates to a method for charging a secondary battery including a positive electrode current collector, a positive electrode active material layer, a solid electrolyte layer, and a negative electrode current collector in this order, and utilizing a deposition-dissolution reaction of metallic lithium as the reaction of the negative electrode. The charging method includes a multi-stage charging step including at least a first charging step and a second charging step. In the first charging step, the secondary battery is charged at a first current density I1 to deposit metallic lithium on a surface on the solid electrolyte layer side of the negative electrode current collector to form a deposited Li layer that is a part of a negative electrode active material layer and that contains the metallic lithium. In the second charging step, after the first charging step, the secondary battery is charged at a second current density I2 greater than the first current density I1 to increase the thickness of the deposited Li layer. Then, the first charging step is characterized in that it includes performing pausing at least once or discharging at least once, and is characterized in that the secondary battery is charged at the first current density I1 so that the SOC does not exceed 4.5%.

### BRIEF DESCRIPTION OF DRAWING

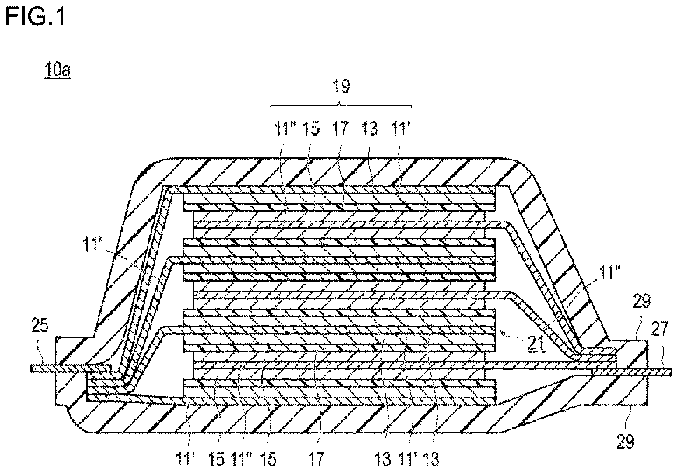

Fig. 1 is a cross-sectional view schematically illustrating a flat laminate type all-solid-state lithium secondary battery according to an embodiment of the present invention.

### DESCRIPTION OF EMBODIMENTS

Hereinafter, embodiments of the present invention will be described with reference to the accompanying drawings, but the technical scope of the present invention should be determined on the basis of the description of the claims, and is not limited only to the following embodiments. In the description of the drawings, the same elements are denoted by the same reference numerals, and repeated description will be omitted. In addition, the dimensional proportions in the drawings are exaggerated for convenience of description, and may be different from the actual proportions. The numerical range "A to B" in the present description means "A or more and B or less". "A and/or B" means "either A or B" or "both A and B".

An embodiment of the present invention relates to a method for charging a secondary battery including a positive electrode current collector, a positive electrode active material layer, a solid electrolyte layer, and a negative electrode current collector in this order, and utilizing a deposition-dissolution reaction of metallic lithium as the reaction of the negative electrode. The charging method includes a multi-stage charging step including at least a first charging step and a second charging step. In the first charging step, the secondary battery is charged at a first current density I1 to deposit metallic lithium on a surface on the solid electrolyte layer side of the negative electrode current collector to form a deposited Li layer that is a part of a negative electrode active material layer and that contains the metallic lithium. In the second charging step, after the first charging step, the secondary battery is charged at a second current density I2 greater than the first current density I1 to increase the thickness of the deposited Li layer. Then, the first charging step is characterized in that it includes performing pausing at least once or discharging at least once, and is characterized in that the secondary battery is charged at the first current density I1 so that the SOC does not exceed 4.5%. According to the charging method according to the present embodiment, a short circuit in the secondary battery can be more effectively suppressed.

First, a secondary battery to which the charging method according to the present embodiment is applied will be described. Fig. 1 is a cross-sectional view schematically illustrating a flat laminate type all-solid-state lithium secondary battery according to an embodiment of the present invention. In the present description, a flat laminate type non-bipolar lithium secondary battery (hereinafter also simply referred to as a "laminate type secondary battery") illustrated in Fig. 1 will be described in detail as an example. However, when viewed from the electrical connection form (electrode structure) inside the all-solid-state lithium secondary battery according to the present embodiment, the present invention can be applied to both a non-bipolar type (internal parallel connection type) battery and a bipolar type (internal series connection type) battery.

As shown in Fig. 1, a laminate type secondary battery 10a of the present embodiment has a structure in which a power generating element 21, which has a flat and substantially rectangular shape, and in which a charge-discharge reaction actually proceeds, is sealed inside a laminate film 29 which is a battery outer casing material. Here, the power generating element 21 has a configuration in which a positive electrode, a solid electrolyte layer 17, and a negative electrode are laminated. The positive electrode has a structure in which a positive electrode active material layer 13 containing a positive electrode active material (here, an NMC composite oxide (LiNi_{0.8}Mn_{0.1}Co_{0.1}O₂)) is disposed on both surfaces of a positive electrode current collector 11'. The negative electrode has a structure in which a negative electrode active material layer 15 containing a negative electrode active material (a deposited Li layer made of metallic lithium as a negative electrode active material) is disposed on both surfaces of a negative electrode current collector 11". Specifically, the positive electrode, the solid electrolyte layer, and the negative electrode are laminated in this order such that one positive electrode active material layer 13 and the negative electrode active material layer 15 adjacent thereto face each other via the solid electrolyte layer 17. Thereby, the adjacent positive electrode, solid electrolyte layer, and negative electrode constitute one single battery layer 19. Therefore, it can also be said that the laminate type secondary battery 10a shown in Fig. 1 has a configuration in which a plurality of single battery layers 19 are laminated to be electrically connected in parallel.

As illustrated in Fig. 1, although the positive electrode active material layer 13 is disposed on only one surface of each of outermost positive electrode current collectors located in both outermost layers of the power-generating element 21, the active material layer may be provided on both surfaces. In other words, instead of using a current collector exclusively for an outermost layer provided with the active material layer only on one surface thereof, a current collector provided with the active material layer on both surfaces thereof may be used as it is as an outermost current collector.

The positive electrode current collector 11' and the negative electrode current collector 11" have a structure in which a positive electrode current collecting plate (tab) 25 and a negative electrode current collecting plate (tab) 27 which are electrically connected to the respective electrodes (the positive electrode and the negative electrode) are attached respectively, and led out to the outside of the laminate film 29 which is a battery outer casing material so as to be sandwiched between end portions of the laminate film 29. The positive electrode current collecting plate 25 and the negative electrode current collecting plate 27 may be attached to the positive electrode current collector 11' and the negative electrode current collector 11" of the respective electrodes via a positive electrode lead and a negative electrode lead (not illustrated), respectively, by ultrasonic welding, resistance welding, or the like as necessary. A restraint pressure is applied to the laminate type secondary battery 10a in the lamination direction of the power generating elements 21 by a pressure member (not illustrated). Therefore, the volume of the power generating element 21 is kept constant.

Hereinafter, main constituent members of the all-solid-state lithium secondary battery according to the present embodiment will be described.

### [Positive electrode current collector]

The positive electrode current collector is a conductive member that functions as a flow path for electrons emitted from the positive electrode toward an external load or flowing from a power supply toward the positive electrode with the progress of a battery reaction (charge-discharge reaction). The material constituting the positive electrode current collector is not particularly limited. As a constituent material of the positive electrode current collector, for example, a metal or a resin having an electrical conduction property can be adopted.

Specific examples of the metal include aluminum, nickel, iron, stainless steel, titanium, copper, and the like. In addition to these, a clad material of nickel and aluminum, a clad material of copper and aluminum, or the like may be used. Further, a foil in which a metal surface is coated with aluminum may be used. Among them, aluminum, stainless steel, copper, and nickel are preferable from the viewpoint of an electron conduction property, a battery operating potential, and the like. Examples of the latter resin having an electrical conduction property include a resin obtained by adding a conductive filler to a nonconductive polymer material.

The current collector may have a single-layer structure made of a single material, or may have a laminated structure in which layers made of these materials are appropriately combined. From the viewpoint of weight reduction of the current collector, it is preferable that the current collector includes at least a conductive resin layer made of a resin having conductivity. From the viewpoint of blocking the movement of lithium ions between single battery layers, a metal layer may be provided in a part of the current collector.

The thickness of the positive electrode current collector is not particularly limited, and is, for example, 10 to 100 µm.

### [Positive electrode active material layer]

The positive electrode active material layer contains a positive electrode active material. The type of the positive electrode active material is not particularly limited, and examples thereof include layered rock salt-type active materials such as LiCoO₂, LiMnO₂, LiNiO₂, LiVO₂, and Li(Ni-Mn-Co)O₂, spinel-type active materials such as LiMn₂O₄ and LiNi_{0.5}Mn_{1.5}O₄, olivine-type active materials such as LiFePO₄ and LiMnPO₄, Si-containing active materials such as Li₂FeSiO₄ and Li₂MnSiO₄, and the like. Further, examples of the oxide active material other than those described above include Li₄Ti₅O₁₂. Among them, a composite oxide containing lithium and nickel is preferably used, and Li(Ni-Mn-Co)O₂ and a composite oxide in which some transition metals thereof are substituted with other elements (hereinafter, also simply referred to as "NMC composite oxide") are more preferably used. The NMC composite oxide has a layered crystal structure in which a lithium atomic layer and a transition metal (Mn, Ni, and Co are orderly arranged) atomic layer are alternately stacked via an oxygen atomic layer, one Li atom is contained per atom of the transition metal M, the amount of Li that can be taken out is twice that of the spinel type lithium-manganese oxide, that is, the supply capacity is twice that of the spinel type lithium-manganese oxide, and the NMC composite oxide can have a high capacity.

As described above, the NMC composite oxide also includes a composite oxide in which some transition metal elements are substituted with other metal elements. Examples of other elements in this case include Ti, Zr, Nb, W, P, Al, Mg, V, Ca, Sr, Cr, Fe, B, Ga, In, Si, Mo, Y, Sn, V, Cu, Ag, Zn, and the like, and other elements are preferably Ti, Zr, Nb, W, P, Al, Mg, V, Ca, Sr, and Cr, more preferably Ti, Zr, P, Al, Mg, and Cr, and still more preferably Ti, Zr, Al, Mg, and Cr from the viewpoint of improving cycle characteristics.

Further, it is also one of preferred embodiments that a sulfur-based positive electrode active material is used. Examples of the sulfur-based positive electrode active material include a particle or a thin film of an organic sulfur compound or an inorganic sulfur compound, and any material may be used as long as it can release lithium ions during charging and occlude lithium ions during discharging by utilizing an oxidation-reduction reaction of sulfur. Examples of the organic sulfur compound include a disulfide compound, a sulfur-modified polyacrylonitrile represented by a compound described in WO 2010/044437 A, a sulfur-modified polyisoprene, rubeanic acid (dithiooxamide), polysulfide carbon, and the like. Among them, a disulfide compound, a sulfur-modified polyacrylonitrile, and rubeanic acid are preferable, and sulfur-modified polyacrylonitrile is particularly preferable. As the disulfide compound, one having a dithiobiurea derivative, a thiourea group, a thioisocyanate, or a thioamide group is more preferable. Here, the sulfur-modified polyacrylonitrile is a modified polyacrylonitrile containing a sulfur atom obtained by mixing a sulfur powder and polyacrylonitrile followed by heating in an inert gas or under reduced pressure. The putative structure thereof is a structure in which polyacrylonitrile is cyclized to be polycyclic, and at least some S is bonded to C as shown in, for example, Chem. Mater. 2011, 23, 5024-5028. The compound described in this document has strong peak signals at around 1330 cm⁻¹ and 1560 cm⁻¹ in the Raman spectrum, and further has peaks at around 307 cm⁻¹, 379 cm⁻¹, 472 cm⁻¹, and 929 cm⁻¹. Meanwhile, the inorganic sulfur compound is preferable because it is excellent in stability, and specific examples thereof include sulfur (S), a S-carbon composite, TiS₂, TiS₃, TiS₄, NiS, NiS₂, CuS, FeS₂, Li₂S, MoS₂, MoS₃, and the like. Among them, S, a S-carbon composite, TiS₂, TiS₃, TiS₄, FeS₂, and MoS₂ are preferable, and a S-carbon composite, TiS₂, and FeS₂ are more preferable. Here, the S-carbon composite is one that contains a sulfur powder and a carbon material, and is in a state of being composited by subjecting these to a heat treatment or mechanical mixing. More specifically, the S-carbon composite is in a state in which sulfur is distributed on the surface or in pores of the carbon material, a state in which sulfur and the carbon material are uniformly dispersed at a nano-level and are aggregated into a particle, a state in which the carbon material is distributed on the surface or inside of a fine sulfur powder, or a state in which a plurality of these states are combined.

In some cases, two or more types of positive electrode active materials may be used in combination. It is needless to say that a positive electrode active material other than those described above may be used. The content of the positive electrode active material in the positive electrode active material layer is not particularly limited, but is, for example, preferably in the range of 35 to 99% by mass, and more preferably in the range of 40 to 90% by mass.

The positive electrode active material layer preferably further contains a solid electrolyte. When the positive electrode active material layer contains a solid electrolyte, the ion conduction property of the positive electrode active material layer can be improved. Examples of the solid electrolyte include a sulfide solid electrolyte and an oxide solid electrolyte, but it is preferable to contain a sulfide solid electrolyte from the viewpoint of high ion conductivity.

Examples of the sulfide solid electrolyte include LiI-Li₂S-SiS₂, LiI-Li₂S-P₂O₅, LiI-Li₃PO₄-P₂S₅, Li₂S-P₂S₅, LiI-Li₃PS₄, LiI-LiBr-Li₃PS₄, Li₃PS₄, Li₂S-P₂S₅-LiI, Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ (where m and n are positive numbers, and Z is any of Ge, Zn, and Ga), Li₂S-GeS₂, Li₂S-SiS₂-Li₃PO₄, Li₂S-SiS₂-LiₓMO_{y} (where x and y are positive numbers, and M is any of P, Si, Ge, B, Al, Ga, and In), and the like. The description of "Li₂S-P₂S₅" means a sulfide solid electrolyte obtained by using a raw material composition containing Li₂S and P₂S₅, and the same applies to other descriptions.

The sulfide solid electrolyte may have, for example, a Li₃PS₄ skeleton, a Li₄P₂S₇ skeleton, or a Li₄P₂S₆ skeleton. Examples of the sulfide solid electrolyte having a Li₃PS₄ skeleton include LiI-Li₃PS₄, LiI-LiBr-Li₃PS₄, and Li₃PS₄. Examples of the sulfide solid electrolyte having a Li₄P₂S₇ skeleton include a Li-P-S-based solid electrolyte called LPS (e.g., Li₇P₃S₁₁). As the sulfide solid electrolyte, for example, LGPS expressed by Li₍₄₋ₓ₎Ge₍₁₋ₓ₎PₓS₄ (x satisfies 0 < x < 1) or the like may be used. Above all, the sulfide solid electrolyte is preferably a sulfide solid electrolyte containing a P element, and the sulfide solid electrolyte is more preferably a material containing Li₂S-P₂S₅ as a main component. Furthermore, the sulfide solid electrolyte may contain halogen (F, Cl, Br, I).

In a case where the sulfide solid electrolyte is Li₂S-P₂S₅ based, a molar ratio of Li₂S and P₂S₅ is preferably within a range of Li₂S : P₂S₅ = 50 : 50 to 100 : 0, and particularly preferably within a range of Li₂S : P₂S₅ = 70 : 30 to 80 : 20.

In addition, the sulfide solid electrolyte may be sulfide glass, may be crystallized sulfide glass, or may be a crystalline material obtained by a solid phase method. The sulfide glass can be obtained, for example, by performing mechanical milling (ball milling or the like) on a raw material composition. The crystallized sulfide glass can be obtained, for example, by heat-treating sulfide glass at a temperature equal to or higher than a crystallization temperature. In addition, ion conductivity (e.g., Li ion conductivity) of the sulfide solid electrolyte at a normal temperature (25°C) is, for example, preferably 1 × 10⁻⁵ S/cm or more, and more preferably 1×10⁻⁴ S/cm or more. A value of the ion conductivity of the solid electrolyte can be measured by an AC impedance method.

Examples of the oxide solid electrolyte include a compound having a NASICON-type structure, and the like. Examples of the compound having a NASICON-type structure include a compound (LAGP) expressed by general formula: Li₁₊ₓAlₓGe₂₋ₓ(PO₄)₃ (0 ≤ x ≤ 2), a compound (LATP) expressed by general formula: Li₁₊ₓAlₓTi₂₋ₓ(PO₄)₃ (0 ≤ x ≤ 2), and the like. Other examples of the oxide solid electrolyte include LiLaTiO (e.g., Li_{0.34}La_{0.51}TiO₃), LiPON (e.g., Li_{2.9}PO_{3.3}N_{0.46}), LiLaZrO (e.g., Li₇La₃Zr₂O₁₂), and the like.

Examples of the shape of the solid electrolyte include particle shapes such as a perfectly spherical shape and an elliptically spherical shape, a thin film shape, and the like. When the solid electrolyte has a particle shape, the average particle diameter (D₅₀) is not particularly limited, but is preferably 40 µm or less, more preferably 20 µm or less, and still more preferably 10 µm or less. Meanwhile, the average particle diameter (D₅₀) is preferably 0.01 µm or more, and more preferably 0.1 µm or more.

The content of the solid electrolyte in the positive electrode active material layer is, for example, preferably in the range of 1 to 60% by mass, and more preferably in the range of 10 to 50% by mass.

The positive electrode active material layer may further contain at least one of a conductive aid and a binder in addition to the positive electrode active material and the solid electrolyte described above.

Examples of the conductive aid include metals such as aluminum, stainless steel (SUS), silver, gold, copper, and titanium, alloys or metal oxides containing these metals; and carbon such as carbon fibers (specifically, vapor grown carbon fibers (VGCFs), polyacrylonitrile-based carbon fibers, pitch-based carbon fibers, rayon-based carbon fibers, activated carbon fibers, and the like), carbon nanotubes (CNTs), carbon black (specifically, acetylene black, Ketjen black (registered trademark), furnace black, channel black, thermal lamp black, and the like), but are not limited thereto. In addition, a material obtained by coating a periphery of a particulate ceramic material or resin material with the metal material by plating or the like can also be used as the conductive aid. Among these conductive aids, from the viewpoint of electrical stability, it is preferable to contain at least one selected from the group consisting of aluminum, stainless steel, silver, gold, copper, titanium, and carbon, it is more preferable to contain at least one selected from the group consisting of aluminum, stainless steel, silver, gold, and carbon, and it is still more preferable to contain at least one type of carbon. Among these conductive aids, only one type may be used alone or two or more types may be used in combination.

The shape of the conductive aid is preferably particulate or fibrous. When the conductive aid is particulate, the shape of the particle is not particularly limited, and may be any shape of a powder shape, a spherical shape, a rod shape, a needle shape, a plate shape, a columnar shape, an irregular shape, a scaly shape, a spindle shape, and the like.

The average particle diameter (primary particle diameter) when the conductive aid is particulate is not particularly limited, but is preferably 0.01 to 10 µm from the viewpoint of electrical characteristics of the battery. In the present description, the "particle diameter of the conductive aid" means the maximum distance L among the distances between any two points on the contour line of the conductive aid. As the value of the "average particle diameter of the conductive aid", a value calculated as an average value of particle diameters of particles observed in several to several tens of fields of view using an observation means such as a scanning electron microscope (SEM) or a transmission electron microscope (TEM) is adopted.

When the positive electrode active material layer contains a conductive aid, the content of the conductive aid in the positive electrode active material layer is not particularly limited, but is preferably 0 to 10% by mass, more preferably 2 to 8% by mass, and still more preferably 4 to 7% by mass with respect to the total mass of the positive electrode active material layer. Within such a range, a stronger electron conduction path can be formed in the positive electrode active material layer, and this can effectively contribute to improvement of battery characteristics.

Meanwhile, the binder is not particularly limited, and examples thereof include the following materials.

Polybutylene terephthalate, polyethylene terephthalate, polyvinylidene fluoride (PVDF) (including a compound in which a hydrogen atom is substituted with another halogen element), polyethylene, polypropylene, polymethylpentene, polybutene, polyether nitrile, polytetrafluoroethylene, polyacrylonitrile, polyimide, polyamide, an ethylene-vinyl acetate copolymer, polyvinyl chloride, styrene-butadiene rubber (SBR), an ethylene-propylene-diene copolymer, a styrene-butadienestyrene block copolymer and a hydrogenated product thereof, a styreneisoprene-styrene block copolymer and a hydrogenated product thereof; fluorine resins such as a tetrafluoroethylene-hexafluoropropylene copolymer (FEP), a tetrafluoroethylene-perfluoroalkylvinylether copolymer (PFA), an ethylene-tetrafluoroethylene copolymer (ETFE), polychlorotrifluoroethylene (PCTFE), an ethylene-chlorotrifluoroethylene copolymer (ECTFE), and polyvinyl fluoride (PVF); and vinylidene fluoride-based fluorine rubber such as vinylidene fluoride-hexafluoropropylene-based fluorine rubber (VDF-HFP-based fluorine rubber), vinylidene fluoride-hexafluoropropylene-tetrafluoroethylene-based fluorine rubber (VDF-HFP-TFE-based fluorine rubber), vinylidene fluoride-pentafluoropropylene-based fluorine rubber (VDF-PFP-based fluorine rubber), vinylidene fluoride-pentafluoropropylene-tetrafluoroethylene-based fluorine rubber (VDF-PFP-TFE-based fluorine rubber), vinylidene fluoride-perfluoromethylvinylether-tetrafluoroethylene-based fluorine rubber (VDF-PFMVE-TFE-based fluorine rubber), vinylidene fluoride-chlorotrifluoroethylene-based fluorine rubber (VDF-CTFE-based fluorine rubber); and epoxy resins, and the like can be exemplified. Among them, polyimide, styrene-butadiene rubber, carboxymethyl cellulose, polypropylene, polytetrafluoroethylene, polyacrylonitrile, and polyamide are more preferable.

The thickness of the positive electrode active material layer varies depending on the configuration of the intended all-solid-state battery, but is, for example, preferably in the range of 0.1 to 1000 µm, more preferably 40 to 100 µm.

### [Solid electrolyte layer]

The solid electrolyte layer is a layer containing a solid electrolyte as a main component and is interposed between the negative electrode active material layer and the positive electrode active material layer. Since the specific form of the solid electrolyte contained in the solid electrolyte layer is the same as that described above, the detailed description thereof is omitted here.

The content of the solid electrolyte in the solid electrolyte layer is, for example, preferably in the range of 10 to 100% by mass, more preferably in the range of 50 to 100% by mass, and still more preferably in the range of 90 to 100% by mass.

The solid electrolyte layer may further contain a binder in addition to the solid electrolyte described above. Since the specific form of the binder that can be contained in the solid electrolyte layer is the same as that described above, the detailed description thereof is omitted here.

The thickness of the solid electrolyte layer varies depending on the configuration of the intended all-solid-state battery, but is preferably 600 µm or less, more preferably 500 µm or less, and still more preferably 400 µm or less from the viewpoint that the volume energy density of the battery can be improved. Meanwhile, the lower limit value of the thickness of the solid electrolyte layer is not particularly limited, but is preferably 1 µm or more, more preferably 5 µm or more, and still more preferably 10 µm or more.

### [Negative electrode current collector]

The negative electrode current collector is a conductive member that functions as a flow path for electrons emitted from the negative electrode toward the power supply or flowing from an external load toward the negative electrode with the progress of a battery reaction (charge-discharge reaction). The material constituting the negative electrode current collector is not particularly limited. As a constituent material of the negative electrode current collector, a metal or a resin having an electrical conduction property can be adopted similarly to the positive electrode current collector. The thickness of the negative electrode current collector is not particularly limited, and is, for example, 10 to 100 µm.

### [Negative electrode active material layer]

The all-solid-state battery according to the present embodiment is of a so-called lithium-deposition type in which lithium metal is deposited on a negative electrode current collector in a charging process. The layer made of lithium metal (deposited Li layer) deposited on the negative electrode current collector in this charging process is the negative electrode active material layer of the lithium secondary battery according to the present embodiment. Therefore, the thickness of the negative electrode active material layer increases with the progress of the charging process, and the thickness of the negative electrode active material layer decreases with the progress of the discharging process. The thickness of the negative electrode active material layer (lithium metal layer) at full charge is not particularly limited, but is usually 0.1 to 1000 µm.

### [Positive electrode lead and Negative electrode lead]

Although not illustrated, the current collector and the current collecting plate may be electrically connected with a positive electrode lead or a negative electrode lead interposed therebetween. As a material constituting the positive electrode lead and the negative electrode lead, a material used in a known lithium secondary battery can be similarly adopted. The portion taken out from an outer casing is preferably covered with a heat resistant and insulating heat shrinkable tube or the like so as not to affect a product (e.g., an automotive component, particularly an electronic device, or the like) due to electric leakage caused by contact with peripheral devices, wiring lines, or the like.

### [Battery outer casing material]

As the battery outer casing material, a known metal can case can be used, and a bag-shaped case using the aluminum-containing laminate film 29, which can cover a power-generating element can be used. As the laminate film, for example, a laminate film or the like having a three-layer structure formed by laminating PP, aluminum, and nylon can be used, but the laminate film is not limited thereto. The laminate film is desirable from the viewpoint of high output and excellent cooling performance, and suitable application for batteries for large devices for EV and HEV. Further, from the perspective of easy adjustment of a group pressure applied to the power-generating element from an outside, the outer casing body is more preferably a laminate film containing aluminum.

The laminate type secondary battery according to the present embodiment has a configuration in which a plurality of single battery layers are connected in parallel, and thus has a high capacity and excellent cycle durability. Therefore, the laminate type secondary battery according to the present embodiment is suitably used as a power supply for driving an EV and an HEV.

### [Charging method]

Next, a method for charging a secondary battery according to the present embodiment will be described. The method for charging a secondary battery according to the present embodiment has a multi-stage charging step, and includes at least a first charging step in which the secondary battery is charged at a first current density I1 to deposit metallic lithium on a surface on the solid electrolyte layer side of the negative electrode current collector to form a deposited Li layer that is a part of a negative electrode active material layer and that contains the metallic lithium, and a second charging step in which the secondary battery is charged at a second current density I2 greater than the first current density I1 after the first charging step to increase a thickness of the deposited Li layer, wherein the first charging step is characterized in that it includes performing pausing at least once or discharging at least once, in which the secondary battery is charged at the first current density I1 so that the SOC does not exceed 4.5%.

Although the mechanism of effectively suppressing a short circuit (in particular, a short circuit due to deposition and growth of a dendrite) in the battery by the above-mentioned configuration is not completely clear, the following mechanism is presumed. That is, the solid electrolyte layer and the negative electrode current collector of the all-solid-state lithium secondary battery according to the present embodiment are both a solid and have some irregularities on the surface, and therefore are in contact with each other in a point contact state before the initial charging. When the initial charging is started, lithium is deposited in a space portion between the solid electrolyte layer and the negative electrode active material layer with a contact point at which the solid electrolyte layer and the negative electrode current collector are in contact as a starting point. At this time, since charges are concentrated in a portion of the contact point, a dendrite deposits and grows from the contact point toward the positive electrode to penetrate the solid electrolyte layer, and a short circuit may occur. In the charging method according to the present embodiment, in the first charging step, charging is performed at a relatively small current density I1 until the SOC does not exceed 4.5%, so that it is possible to prevent rapid growth of a dendrite starting from the contact point. In addition, the charge concentration can be alleviated by performing pausing. Alternatively, by performing discharging instead of or in addition to the pausing, the grown dendrite can be dissolved and a dendrite path can be cut. By performing such a first charging step, it is possible to suppress formation of fine dendrites that can be grown by subsequent charging at a relatively large current density I2. As a result, a short circuit in the secondary battery can be more effectively suppressed. According to the conventional technique described in JP 2020-009724 A, charging is performed until the SOC becomes about 4.7% or more in the first charging step. As a result of studies by the present inventors, when charging is performed until the SOC exceeds 4.5% in the first charging step, formation of fine dendrites cannot be sufficiently suppressed even if pausing or discharging is performed, and a short circuit in the secondary battery sometimes cannot be sufficiently suppressed. That is, according to the method for charging a secondary battery according to the present embodiment, the number of fine dendrites on the surface on the solid electrolyte layer side of the deposited Li layer formed in the first charging step can be reduced (the surface on the solid electrolyte layer side of the deposited Li layer can be formed smoother). Therefore, it is possible to significantly suppress a short circuit as compared with the conventional technique described in JP 2020-009724 A.

Hereinafter, each step will be described in detail.

### (First charging step)

In the first charging step, the secondary battery is charged at a first current density I1 to deposit metallic lithium on a surface on the solid electrolyte layer side of the negative electrode current collector to form a deposited Li layer that is a part of the negative electrode active material layer and that contains the metallic lithium. Then, the first charging step is characterized in that it includes performing pausing at least once or discharging at least once, and is characterized in that the secondary battery is charged at the first current density I1 so that the SOC does not exceed 4.5%.

The first current density I1 is not particularly limited as long as it is smaller than the second current density I2 in the second charging step described later, but is preferably less than 0.22 (mA/cm²), more preferably 0.01 (mA/cm²) or more and 0.21 (mA/cm²) or less, and still more preferably 0.02 (mA/cm²) or more and 0.10 (mA/cm²) or less. When the first current density I1 is less than 0.22 (mA/cm²), deposition and growth of a dendrite are less likely to occur, and the effect of suppressing a short circuit in the secondary battery is further enhanced. When the first current density I1 is 0.01 (mA/cm²) or more, the charging time can be shortened.

The charging rate (C) in the first charging step (the charging rate (C) when the secondary battery is charged at the first current density I1) is preferably less than 0.05 (C), more preferably 0.0023 (C) or more and 0.048 (C) or less, and still more preferably 0.0045 (C) or more and 0.023 (C) or less. When the charging rate (C) is less than 0.05 (C), deposition and growth of a dendrite are less likely to occur, and the effect of suppressing a short circuit in the secondary battery is further enhanced. When the charging rate (C) is 0.0023 (C) or more, the charging time can be shortened. Note that 1 C is a current value at which the battery has just reached a fully charged (100% charged) state when charging is performed at the current value for 1 hour.

In the present embodiment, the first charging step includes performing pausing at least once or discharging at least once.

Here, the "pausing" refers to a state in which charging and discharging are not performed. The pausing time per pausing when pausing is performed is not particularly limited, but is preferably 0.005 hours (18 seconds) or more, more preferably 0.01 hours (36 seconds) or more, and still more preferably 0.02 hours (72 seconds) or more. When the pausing time is 0.01 hours (36 seconds) or more, the concentration of charges is further alleviated, and the effect of suppressing a short circuit in the secondary battery is further enhanced.

The upper limit value of the pausing time is not particularly limited, but is usually 3 hours or less, preferably 2 hours or less, and more preferably 1.5 hours or less. The number of pausing times is also not particularly limited, but is usually 1 to 10 and preferably 3 to 5. When the number of pausing times is 3 to 5, the concentration of charges is further alleviated, and the effect of suppressing a short circuit in the secondary battery is further enhanced. In addition, when the below-mentioned discharging is included, it is preferable to perform pausing after discharging in addition to pausing during or after charging or instead of pausing during or after charging. The number of pausing times in the case of performing pausing after discharging in addition to pausing during or after charging is usually 1 to 20, and preferably 6 to 10.

When discharging is performed, the discharge lower limit voltage (cutoff voltage or end-of-discharge voltage) is not particularly limited, but is preferably 0 to 2.5 V, more preferably 2.0 to 2.5 V, and still more preferably 2.3 to 2.5 V. When the discharge lower limit voltage is 2.5 V or less, a dendrite path can be sufficiently cut, so that the effect of suppressing a short circuit in the secondary battery is further enhanced. Even when the discharging is performed until the discharge lower limit voltage reaches 0 V, the deposited Li layer slightly remains between the solid electrolyte layer and the negative electrode current collector. This remaining deposited Li layer is due to the suppression of the formation of fine dendrites by discharging, and therefore even when charging is performed at a relatively large charging density I2 in the subsequent second charging step, a short circuit in the secondary battery is less likely to occur as compared with the conventional technique described in JP 2020-009724 A.

The current density and the discharging rate during discharging are also not particularly limited, and may be comparable to the first current density and the charging rate in the first charging step. That is, the current density during discharging is preferably less than 0.22 (mA/cm²), more preferably 0.01 (mA/cm²) or more and 0.21 (mA/cm²) or less, and still more preferably 0.02 (mA/cm²) or more and 0.10 (mA/cm²) or less. Further, the discharging rate (C) during discharging is preferably less than 0.05 (C), more preferably 0.0023 (C) or more and 0.048 (C) or less, and still more preferably 0.0045 (C) or more and 0.023 (C) or less.

The number of discharging times is also not particularly limited, but is usually 1 to 10 and preferably 3 to 5. When the number of discharging times is 3 to 5, the concentration of charges is further alleviated, and the effect of suppressing a short circuit in the secondary battery is further enhanced.

In the first charging step, it is essential to perform pausing at least once or discharging at least once, but from the viewpoint of more effectively suppressing formation of fine dendrites, it is preferable to perform discharging at least once, more preferable to perform pausing at least once and discharging at least once. When both pausing and discharging are performed, it is preferable to perform pausing between charging and discharging. In addition, in a case where pausing and/or discharging is performed a plurality of times in the first charging step, for example, a cycle that "charging is performed, and then pausing and/or discharging is performed" may be repeated. At this time, respective charging conditions, pausing conditions, and/or discharging conditions may be the same or different, but in consideration of convenience of operation, respective charging conditions, pausing conditions, and/or discharging conditions are preferably the same. The last operation in the first charging step may be any of charging, pausing, and discharging.

The present embodiment is also characterized in that the secondary battery is charged at the first current density I1 so that the SOC does not exceed 4.5% in the first charging step. In the first charging step, when charging is performed a plurality of times, charging is performed so that the SOC does not exceed 4.5% in each charging (that is, the SOC does not exceed 4.5% in the first charging step.). This is because, as described above, when charging is performed until the SOC exceeds 4.5% as in the conventional technique described in JP 2020-009724 A, formation of fine dendrites cannot be sufficiently suppressed even if pausing or discharging is performed, and a short circuit in the secondary battery sometimes cannot be sufficiently suppressed. It is essential that the SOC at the end of the first charging step is 4.5% or less, but the SOC is preferably 0.5 to 3.0% and more preferably 1.0 to 2.0%.

### (Second charging step)

In the second charging step, the secondary battery is charged at a second current density I2 greater than the first current density I1 to increase the thickness of the deposited Li layer.

The second current density I2 is not particularly limited as long as it is greater than the first current density I1 (when there are a plurality of first current densities I1, the largest one among them) in the first charging step, but is preferably 0.22 (mA/cm²) or more, and more preferably 0.22 to 1.00 (mA/cm²). When the second current density I2 is 0.22 (mA/cm²) or more, the charging time can be shortened. When the second current density I2 is 1.00 (mA/cm²) or less, deposition and growth of a dendrite are less likely to occur, and the effect of suppressing a short circuit in the secondary battery is further enhanced.

The charging rate (C) in the second charging step (the charging rate (C) when the secondary battery is charged at the second current density I2) is preferably 0.05 (C) or more, and more preferably 0.05 to 0.23 (C). When the charging rate (C) is 0.05 (C) or more, the charging time can be shortened. When the charging rate (C) is 0.23 (C) or less, deposition and growth of a dendrite are less likely to occur, and the effect of suppressing a short circuit in the secondary battery is further enhanced.

The method for charging a secondary battery according to the present embodiment is preferably performed at the time of initial charging, and may be performed at the time of second or later charging as necessary.

The following embodiments are also included in the scope of the present invention: the method for charging a secondary battery according to claim 1 having the feature of claim 2; the method for charging a secondary battery according to claim 1 or 2 having the feature of claim 3; and the method for charging a secondary battery according to any one of claims 1 to 3 having the feature of claim 4.

### Examples

Hereinafter, the present invention will be described in more detail with reference to examples. However, the technical scope of the present invention is not limited only to the following examples.

### <<Production of test cell (all-solid-state lithium secondary battery)>>

### (Production of positive electrode)

As constituent materials of the positive electrode active material layer, an NMC composite oxide (LiNi_{0.8}Mn_{0.1}Co_{0.1}O₂) which is a positive electrode active material, an argyrodite type solid electrolyte (Li₆PS₅Cl, average particle diameter (D50): 0.8 µm) which is a halogen-containing sulfide solid electrolyte having a lithium ion conduction property, acetylene black which is a conductive aid, and styrene-butadiene rubber (SBR) which is a binder were prepared. In a glove box in an argon atmosphere having a dew point of -68°C or lower, the NMC composite oxide, the solid electrolyte, and acetylene black were weighed at a mass ratio of 83.8 : 10.8 : 5.4, mixed in an agate mortar, and then further mixed and stirred in a planetary ball mill. To 100 parts by mass of the resulting mixed powder, 2.7 parts by mass of styrene-butadiene rubber (SBR) was added, and xylene as a solvent was added thereto to prepare a positive electrode active material slurry. The positive electrode active material slurry prepared above was applied to one surface of an aluminum foil (thickness: 20 µm) as a positive electrode current collector and dried to form a positive electrode active material layer (basis weight: 25.0 mg/cm²) to produce a positive electrode.

### (Production of solid electrolyte layer)

An argyrodite type solid electrolyte (Li₆PS₅Cl, average particle diameter (D50): 3 µm) which is a halogen-containing sulfide solid electrolyte having a lithium ion conduction property and SBR which is a binder were mixed at a mass ratio of 95 : 5, an appropriate amount of xylene as a solvent was added thereto, followed by mixing to prepare solid electrolyte slurry. The solid electrolyte slurry prepared above was applied to one surface of a stainless steel (SUS 430LX) foil (thickness: 10 µm) as a negative electrode current collector and dried to form a solid electrolyte layer (basis weight: 3.7 mg/cm², thickness after pressing: 20 µm).

### (Production of test cell)

The solid electrolyte layer produced above was transferred by cold isostatic pressing (CIP) to the exposed surface of the positive electrode produced above. A positive electrode tab made of aluminum and a negative electrode tab made of nickel were joined to an aluminum foil which is a positive electrode current collector and a stainless steel foil which is a negative electrode current collector, respectively, by an ultrasonic welding machine, and the obtained laminate was placed in an aluminum laminate film and vacuum-sealed to produce a test cell.

### <<Charge-discharge test>>

### [Example 1]

The following charge-discharge test was performed while a restraint pressure of 3 MPa was applied in the lamination direction of the test cell produced above using a pressure member.

### (First charging step)

The test cell was allowed to stand in a thermostatic chamber at 60°C for 5 hours, and the temperature of the cell was set to 60°C. Subsequently, charging of the cell was started at a constant current with a current density of 0.04 mA/cm² (corresponding to 0.01 C) as the first current density I1, charging was stopped when the SOC reached 4.5%, and pausing was performed for 0.02 h. Thereafter, discharging of the cell was started at a constant current with a current density of 0.04 mA/cm² (corresponding to 0.01 C), and when the voltage reached 2.5 V, discharging was stopped, and pausing was performed for 0.5 h. As a result, a deposited Li layer made of metallic lithium was formed on the surface on the solid electrolyte layer side of the negative electrode current collector.

### (Second charging step)

Subsequently, charging of the battery was started at a constant current with a current density of 0.22 mA/cm² (corresponding to 0.05 C), charging was switched to a constant voltage mode when the voltage reached 4.2 V, and charging was stopped when the current value reached 0.04 mA/cm² (corresponding to 0.01 C). Through the above operation, charging of the test cell was completed.

### (Measurement of average charge-discharge efficiency)

After the second charging step described above, pausing was performed for 0.5 h. Thereafter, discharging of the battery was started at a constant current with a current density of 0.22 mA/cm² (corresponding to 0.05 C), and discharging was stopped when the voltage reached 2.5 V. Then, the percentage of the discharged charge amount with respect to the charged charge amount ((discharged charge amount/charged charge amount) × 100) was calculated and taken as the charge-discharge efficiency (%). The charge-discharge efficiency (%) was determined for each of five test cells (N = 5), and the average value was taken as the average charge-discharge efficiency (%). In an example in which the value of the average charge-discharge efficiency (%) was less than 80%, it was determined that a slight short circuit occurred.

### [Example 2]

A charge-discharge test was performed in the same manner as in Example 1 except that the above (first charging step) was performed by the following method.

### (First charging step)

The test cell was allowed to stand in a thermostatic chamber at 60°C for 5 hours, and the temperature of the cell was set to 60°C. Subsequently, charging of the cell was started at a constant current with a current density of 0.04 mA/cm² (corresponding to 0.01 C) as the first current density I1, charging was stopped when the SOC reached 3.0%, and pausing was performed for 0.02 h. Thereafter, discharging of the cell was started at a constant current with a current density of 0.04 mA/cm² (corresponding to 0.01 C), and when the voltage reached 2.5 V, discharging was stopped, and pausing was performed for 0.5 h. As a result, a deposited Li layer made of metallic lithium was formed on the surface on the solid electrolyte layer side of the negative electrode current collector.

### [Example 3]

A charge-discharge test was performed in the same manner as in Example 1 except that the above (first charging step) was performed by the following method.

### (First charging step)

The test cell was allowed to stand in a thermostatic chamber at 60°C for 5 hours, and the temperature of the cell was set to 60°C. Subsequently, charging of the cell was started at a constant current with a current density of 0.04 mA/cm² (corresponding to 0.01 C) as the first current density I1, charging was stopped when the SOC reached 1.5%, and pausing was performed for 0.02 h. Thereafter, discharging of the cell was started at a constant current with a current density of 0.04 mA/cm² (corresponding to 0.01 C), and when the voltage reached 2.5 V, discharging was stopped, and pausing was performed for 0.5 h. As a result, a deposited Li layer made of metallic lithium was formed on the surface on the solid electrolyte layer side of the negative electrode current collector.

### [Example 4]

A charge-discharge test was performed in the same manner as in Example 1 except that the above (first charging step) was performed by the following method.

### (First charging step)

The test cell was allowed to stand in a thermostatic chamber at 60°C for 5 hours, and the temperature of the cell was set to 60°C. Subsequently, charging of the cell was started at a constant current with a current density of 0.04 mA/cm² (corresponding to 0.01 C) as the first current density I1, charging was stopped when the SOC reached 1.5%, and pausing was performed for 0.02 h. Thereafter, discharging of the cell was started at a constant current with a current density of 0.04 mA/cm² (corresponding to 0.01 C), and when the voltage reached 2.5 V, discharging was stopped, and pausing was performed for 0.5 h. This cycle was repeated 5 times. As a result, a deposited Li layer made of metallic lithium was formed on the surface on the solid electrolyte layer side of the negative electrode current collector.

### [Example 5]

A charge-discharge test was performed in the same manner as in Example 1 except that the above (first charging step) was performed by the following method.

### (First charging step)

The test cell was allowed to stand in a thermostatic chamber at 60°C for 5 hours, and the temperature of the cell was set to 60°C. Subsequently, charging of the cell was started at a constant current with a current density of 0.04 mA/cm² (corresponding to 0.01 C) as the first current density I1, charging was stopped when the SOC reached 1.5%, and pausing was performed for 0.02 h. Thereafter, discharging of the cell was started at a constant current with a current density of 0.04 mA/cm² (corresponding to 0.01 C), and when the voltage reached 0 V, discharging was stopped, and pausing was performed for 0.5 h. This cycle was repeated 5 times. As a result, a deposited Li layer made of metallic lithium was formed on the surface on the solid electrolyte layer side of the negative electrode current collector.

### [Example 6]

A charge-discharge test was performed in the same manner as in Example 1 except that the above (first charging step) was performed by the following method.

### (First charging step)

The test cell was allowed to stand in a thermostatic chamber at 60°C for 5 hours, and the temperature of the cell was set to 60°C. Subsequently, charging of the cell was started at a constant current with a current density of 0.04 mA/cm² (corresponding to 0.01 C) as the first current density I1, charging was stopped when the SOC reached 1.5%, and pausing was performed for 1.5 h. Thereafter, discharging of the cell was started at a constant current with a current density of 0.04 mA/cm² (corresponding to 0.01 C), and when the voltage reached 2.5 V, discharging was stopped, and pausing was performed for 0.5 h. This cycle was repeated 5 times. As a result, a deposited Li layer made of metallic lithium was formed on the surface on the solid electrolyte layer side of the negative electrode current collector.

### [Example 7]

A charge-discharge test was performed in the same manner as in Example 1 except that the above (first charging step) was performed by the following method.

### (First charging step)

The test cell was allowed to stand in a thermostatic chamber at 60°C for 5 hours, and the temperature of the cell was set to 60°C. Subsequently, charging of the cell was started at a constant current with a current density of 0.04 mA/cm² (corresponding to 0.01 C) as the first current density I1, charging was stopped when the SOC reached 1.5%, and pausing was performed for 0.02 h. Thereafter, discharging of the cell was started at a constant current with a current density of 0.04 mA/cm² (corresponding to 0.01 C), and when the voltage reached 2.5 V, discharging was stopped, and pausing was performed for 0.5 h. This cycle was repeated 10 times. As a result, a deposited Li layer made of metallic lithium was formed on the surface on the solid electrolyte layer side of the negative electrode current collector.

### [Example 8]

A charge-discharge test was performed in the same manner as in Example 1 except that the above (first charging step) was performed by the following method.

### (First charging step)

The test cell was allowed to stand in a thermostatic chamber at 60°C for 5 hours, and the temperature of the cell was set to 60°C. Subsequently, charging of the cell was started at a constant current with a current density of 0.04 mA/cm² (corresponding to 0.01 C) as the first current density I1, charging was stopped when the SOC reached 1.5%, and pausing was performed for 0.02 h. As a result, a deposited Li layer made of metallic lithium was formed on the surface on the solid electrolyte layer side of the negative electrode current collector.

### [Example 9]

A charge-discharge test was performed in the same manner as in Example 1 except that the above (first charging step) was performed by the following method.

### (First charging step)

The test cell was allowed to stand in a thermostatic chamber at 60°C for 5 hours, and the temperature of the cell was set to 60°C. Subsequently, charging of the cell was started at a constant current with a current density of 0.04 mA/cm² (corresponding to 0.01 C) as the first current density I1, charging was stopped when a predetermined time (0.296 h) elapsed (the SOC increased by 0.3%), and pausing was performed for 0.02 h. This charging and pausing operation was repeated 5 times (the SOC reached 1.5% by the fifth charging, and then pausing was performed for 0.02 h). As a result, a deposited Li layer made of metallic lithium was formed on the surface on the solid electrolyte layer side of the negative electrode current collector.

### [Example 10]

A charge-discharge test was performed in the same manner as in Example 1 except that the above (first charging step) and (second charging step) were performed by the following method.

### (First charging step)

The test cell was allowed to stand in a thermostatic chamber at 60°C for 5 hours, and the temperature of the cell was set to 60°C. Subsequently, charging of the cell was started at a constant current with a current density of 0.21 mA/cm² (corresponding to 0.048 C) as the first current density I1, charging was stopped when the SOC reached 1.5%, and pausing was performed for 0.02 h. As a result, a deposited Li layer made of metallic lithium was formed on the surface on the solid electrolyte layer side of the negative electrode current collector.

### (Second charging step)

Subsequently, charging of the battery was started at a constant current with a current density of 0.87 mA/cm² (corresponding to 0.2 C), charging was switched to a constant voltage mode when the voltage reached 4.2 V, and charging was stopped when the current value reached 0.04 mA/cm² (corresponding to 0.01 C). Through the above operation, charging of the test cell was completed.

### [Comparative Example 1]

A charge-discharge test was performed in the same manner as in Example 1 except that the above (first charging step) was performed by the following method.

### (First charging step)

The test cell was allowed to stand in a thermostatic chamber at 60°C for 5 hours, and the temperature of the cell was set to 60°C. Subsequently, charging of the cell was started at a constant current with a current density of 0.87 mA/cm² (corresponding to 0.20 C) as the first current density I1, and charging was stopped when the SOC reached 1.5%. As a result, a deposited Li layer made of metallic lithium was formed on the surface on the solid electrolyte layer side of the negative electrode current collector.

### [Comparative Example 2]

A charge-discharge test was performed in the same manner as in Example 1 except that the above (first charging step) was performed by the following method.

### (First charging step)

The test cell was allowed to stand in a thermostatic chamber at 60°C for 5 hours, and the temperature of the cell was set to 60°C. Subsequently, charging of the cell was started at a constant current with a current density of 4.37 mA/cm² (corresponding to 1.00 C) as the first current density I1, and charging was stopped when the SOC reached 1.5%. As a result, a deposited Li layer made of metallic lithium was formed on the surface on the solid electrolyte layer side of the negative electrode current collector.

### [Comparative Example 3]

A charge-discharge test was performed in the same manner as in Example 1 except that the above (first charging step) was performed by the following method.

### (First charging step)

The test cell was allowed to stand in a thermostatic chamber at 60°C for 5 hours, and the temperature of the cell was set to 60°C. Subsequently, charging of the cell was started at a constant current with a current density of 0.43 mA/cm² (corresponding to 0.10 C) as the first current density I1, charging was stopped when the SOC reached 1.5%, and pausing was performed for 0.02 h. As a result, a deposited Li layer made of metallic lithium was formed on the surface on the solid electrolyte layer side of the negative electrode current collector.

### [Comparative Example 4]

A charge-discharge test was performed in the same manner as in Example 1 except that the above (first charging step) was performed by the following method.

### (First charging step)

The test cell was allowed to stand in a thermostatic chamber at 60°C for 5 hours, and the temperature of the cell was set to 60°C. Subsequently, charging of the cell was started at a constant current with a current density of 0.22 mA/cm² (corresponding to 0.05 C) as the first current density I1, charging was stopped when the SOC reached 1.5%, and pausing was performed for 0.02 h. As a result, a deposited Li layer made of metallic lithium was formed on the surface on the solid electrolyte layer side of the negative electrode current collector.

### [Comparative Example 5]

A charge-discharge test was performed in the same manner as in Example 1 except that the above (first charging step) was performed by the following method.

### (First charging step)

The test cell was allowed to stand in a thermostatic chamber at 60°C for 5 hours, and the temperature of the cell was set to 60°C. Subsequently, charging of the cell was started at a constant current with a current density of 0.87 mA/cm² (corresponding to 0.20 C) as a first current density I1, charging was stopped when the SOC reached 30%, and pausing was performed for 0.02 h. As a result, a deposited Li layer made of metallic lithium was formed on the surface on the solid electrolyte layer side of the negative electrode current collector.

The results are shown in Table 1 below.

### [Table 1]

**[Table 1]**

| | First charging step | | | | | | | | | Second charging step | | | Average charge-discharge efficiency (%) |
|---|---|---|---|---|---|---|---|---|---|---|---|---|---|
| | Current density I1 (mA/cm²) | C rate (C) | Charging time (h) | SOC (%) | Number of pausing times (times) | Pausing time (h) | | Number of discharging times (times) | Discharge lower limit voltage (V) | Current density I2 (mA/cm²) | C rate (C) | Charging time (h) | |
| | | | | | | Between charging and discharging or between charging and subsequent charging | Between discharging and charging | | | | | | |
| Example 1 | 0.04 | 0.01 | 4.45 | 4.5 | 2 | 0.02 | 0.5 | 1 | 2.5 | 0.22 | 0.05 | 20.0 | 82 |
| Example 2 | 0.04 | 0.01 | 2.97 | 3.0 | 2 | 0.02 | 0.5 | 1 | 2.5 | 0.22 | 0.05 | 20.0 | 84 |
| Example 3 | 0.04 | 0.01 | 1.48 | 1.5 | 2 | 0.02 | 0.5 | 1 | 2.5 | 0.22 | 0.05 | 20.0 | 85 |
| Example 4 | 0.04 | 0.01 | 1.48 | 1.5 | 10 | 0.02 | 0.5 | 5 | 2.5 | 0.22 | 0.05 | 20.0 | 88 |
| Example 5 | 0.04 | 0.01 | 1.48 | 1.5 | 10 | 0.02 | 0.5 | 5 | 0 | 0.22 | 0.05 | 20.0 | 82 |
| Example 6 | 0.04 | 0.01 | 1.48 | 1.5 | 10 | 1.5 | 0.5 | 5 | 2.5 | 0.22 | 0.05 | 20.0 | 83 |
| Example 7 | 0.04 | 0.01 | 1.48 | 1.5 | 20 | 0.02 | 0.5 | 10 | 2.5 | 0.22 | 0.05 | 20.0 | 83 |
| Example 8 | 0.04 | 0.01 | 1.48 | 1.5 | 1 | 0.02 | - | 0 | - | 0.22 | 0.05 | 19.7 | 82 |
| Example 9 | 0.04 | 0.01 | 1.48 | 1.5 | 5 | 0.02 | - | 0 | - | 0.22 | 0.05 | 19.7 | 83 |
| Example 10 | 0.21 | 0.048 | 0.31 | 1.5 | 1 | 0.02 | - | 0 | - | 0.87 | 0.2 | 4.9 | 82 |
| Comparative Example 1 | 0.87 | 0.20 | 0.08 | 1.5 | 0 | 0 | - | 0 | - | 0.22 | 0.05 | 19.7 | 34 |
| Comparative Example 2 | 4.37 | 1.00 | 0.02 | 1.5 | 0 | 0 | - | 0 | - | 0.22 | 0.05 | 19.7 | 4 |
| Comparative Example 3 | 0.43 | 0.10 | 0.15 | 1.5 | 1 | 0.02 | - | 0 | - | 0.22 | 0.05 | 19.7 | 36 |
| Comparative Example 4 | 0.22 | 0.05 | 0.30 | 1.5 | 1 | 0.02 | - | 0 | - | 0.22 | 0.05 | 19.7 | 54 |
| Comparative Example 5 | 0.87 | 0.20 | 1.6 | 30.0 | 1 | 0.02 | - | 0 | - | 0.22 | 0.05 | 18.4 | 65 |

From the results shown in Table 1, it can be seen that a short circuit in a secondary battery can be more effectively suppressed according to the present invention.

The present application is based on Japanese Patent Application No. 2021-212284 which has been filed in Japan on December 27, 2021.

### Reference Signs List

- 10a: Laminate type battery
- 11': Negative electrode current collector
- 11": Positive electrode current collector
- 13: Negative electrode active material layer
- 15: Positive electrode active material layer
- 17: Solid electrolyte layer
- 19: Single battery layer
- 21: Power-generating element
- 25: Negative electrode current collecting plate
- 27: Positive electrode current collecting plate
- 29: Laminate film

## Claims

1. A method for charging a secondary battery including a positive electrode current collector, a positive electrode active material layer, a solid electrolyte layer, and a negative electrode current collector in this order and utilizing a deposition-dissolution reaction of metallic lithium as a reaction of a negative electrode, the method having a multi-stage charging step, and comprising at least:
a first charging step in which the secondary battery is charged at a first current density I1 to deposit metallic lithium on a surface on the solid electrolyte layer side of the negative electrode current collector to form a deposited Li layer that is a part of a negative electrode active material layer and that comprises the metallic lithium; and
a second charging step in which the secondary battery is charged at a second current density I2 greater than the first current density I1 after the first charging step to increase a thickness of the deposited Li layer, wherein
the first charging step includes performing pausing at least once or discharging at least once, in which the secondary battery is charged at the first current density I1 so that an SOC does not exceed 4.5%, and
the first current density I1 is less than 0.22 (mA/cm²).

2. The method for charging a secondary battery according to claim 1, wherein
the first charging step includes pausing at least once, and
a pausing time in the pausing is 1.5 hours or less.

3. The method for charging a secondary battery according to claim 1 or 2, wherein
the first charging step includes discharging at least once, and
an end-of-discharge voltage in the discharging is 2.5 V or less.

## Patentansprüche

1. Verfahren zum Laden einer Sekundärbatterie, die einen Stromsammler der positiven Elektrode, eine Schicht aus aktivem Material der positiven Elektrode, eine Festelektrolyt-Schicht sowie einen Stromsammler der negativen Elektrode in dieser Reihenfolge einschließt, sowie Nutzung einer Abscheidungs-Auflösungs-Reaktion von metallischem Lithium als einer Reaktion einer negativen Elektrode, wobei das Verfahren einen mehrstufigen Ladeschritt aufweist und wenigstens umfasst:
einen ersten Ladeschritt, in dem die Sekundärbatterie mit einer ersten Stromdichte I1 geladen wird, um metallisches Lithium an einer Oberfläche an der Seite der Festelektrolyt-Schicht des Stromsammlers der negativen Elektrode abzuscheiden und eine abgeschiedene Li-Schicht auszubilden, die ein Teil einer Schicht aus aktivem Material der negativen Elektrode ist und die das metallische Lithium umfasst; sowie
einen zweiten Ladeschritt, in dem die Sekundärbatterie nach dem ersten Ladeschritt mit einer zweiten Stromdichte I2 geladen wird, die größer ist als die erste Stromdichte 11, wobei
der erste Ladeschritt Durchführen von wenigstens einmaligem Unterbrechen oder wenigstens einmaligem Entladen einschließt, bei dem die Sekundärbatterie mit der ersten Stromdichte I1 so geladen wird, dass ein Ladezustand 4,5 % nicht übersteigt, und
die erste Stromdichte I1 weniger als 0,22 (mA/cm²) beträgt.

2. Verfahren zum Laden einer Sekundärbatterie nach Anspruch 1, wobei
der erste Ladeschritt wenigstens einmaliges Unterbrechen einschließt, und
eine Unterbrechungszeit bei dem Unterbrechen 1,5 Stunden oder weniger beträgt.

3. Verfahren zum Laden einer Sekundärbatterie nach Anspruch 1 oder 2, wobei
der erste Ladeschritt wenigstens einmaliges Entladen einschließt und
eine Entladeschlussspannung bei dem Entladen 2,5 V oder weniger beträgt.

## Revendications

1. Procédé de recharge d'une batterie d'accumulateurs comportant un collecteur de courant d'électrode positive, une couche de matériau actif d'électrode positive, une couche d'électrolyte solide et un collecteur de courant d'électrode négative, dans cet ordre, et utilisant une réaction de dépôt-dissolution de lithium métallique en tant que réaction d'électrode négative, le procédé ayant une étape de recharge en plusieurs étapes, et comprenant au moins :
une première étape de recharge au cours de laquelle la batterie d'accumulateurs est chargée à une première densité de courant I1 afin de déposer du lithium métallique sur une surface du côté de la couche d'électrolyte solide du collecteur de courant de l'électrode négative afin de former une couche de Li déposée qui constitue une partie d'une couche de matériau actif d'électrode négative et qui comprend le lithium métallique ; et
une seconde étape de recharge au cours de laquelle la batterie d'accumulateurs est chargée à une seconde densité de courant I2 supérieure à la première densité de courant I1 après la première étape de recharge afin d'augmenter une épaisseur de la couche de Li déposée, dans lequel
la première étape de recharge comporte la réalisation d'au moins une pause ou d'au moins une décharge, au cours de laquelle la batterie d'accumulateurs est chargée à la première densité de courant I1 de sorte qu'un état de charge (SOC) ne dépasse pas 4,5 %, et
la première densité de courant I1 est inférieure à 0,22 (mA/cm²).

2. Procédé de recharge d'une batterie d'accumulateurs selon la revendication 1, dans lequel
la première étape de recharge comporte la réalisation d'au moins une pause, et
une durée de pause lors de la pause est inférieure ou égale à 1,5 heure.

3. Procédé de recharge d'une batterie d'accumulateurs selon la revendication 1 ou 2, dans lequel
la première étape de recharge comporte la réalisation d'au moins une décharge, et
une tension de fin de décharge lors de la décharge est inférieure ou égale à 2,5 V.
